# EUROPÄISCHE PATENTANMELDUNG

(11) **EP 3 498 514 A1**
(43) Veröffentlichungstag der Anmeldung: **19.06.2019**
(21) Anmeldenummer: 18211890.1
(22) Anmeldetag: 12.12.2018
(51) Int. Cl.: B60K 15/03, B60K 15/07, B64D 37/02

(54) **TANKVORRICHTUNG, FAHRZEUG UND VERFAHREN ZUR HERSTELLUNG EINER TANKVORRICHTUNG**

(30) Priorität: 12.12.2017 DE 102017129526
(71) Anmelder: Deutsches Zentrum für Luft- und Raumfahrt e.V., 51147 Köln (DE)
(72) Erfinder: Drees, Björn, 70771 Leinfelden-Echterdingen (DE); Winkelmann, Peter, 71063 Sindelfingen (DE)
(74) Vertreter: Hoeger, Stellrecht & Partner Patentanwälte mbB

(57) **Zusammenfassung**

Tankvorrichtung, umfassend einen Aufnahmebehälter (12) und mindestens ein mit dem Aufnahmebehälter (12) verbundenes Halteelement (14), dadurch gekennzeichnet, dass das mindestens eine Halteelement (14) einen ersten Teilbereich (26) aufweist, welcher den Aufnahmebehälter (12) in Umfangsrichtung (22) umschließt und welcher mit dem Aufnahmebehälter (12) formschlüssig verbunden ist, und dass das mindestens eine Halteelement (14) einen zweiten Teilbereich (28) zur Befestigung der Tankvorrichtung aufweist, wobei der zweite Teilbereich (28) des mindestens einen Halteelements (14) zu dem Aufnahmebehälter (12) beabstandet angeordnet ist.

## Beschreibung

Die Erfindung betrifft eine Tankvorrichtung, umfassend einen Aufnahmebehälter und mindestens ein mit dem Aufnahmebehälter verbundenes Halteelement.

Ferner betrifft die Erfindung ein Fahrzeug, insbesondere einen Flugkörper, umfassend eine Tankvorrichtung.

Weiterhin betrifft die Erfindung ein Verfahren zur Herstellung einer Tankvorrichtung.

Aus der EP 2 915 687 A1 ist ein Kraftfahrzeug mit einem Drucktank und einem Trageelement bekannt, wobei das Trageelement den Drucktank trägt, das Trageelement als untere Halbschale ausgebildet ist, so dass das Trageelement die Unterseite des Drucktanks zumindest teilweise umgibt, wobei das Trageelement der Kontur des Drucktanks im Wesentlichen folgt, und wobei das Trageelement an der Karosserie des Kraftfahrzeugs befestigt ist, so dass durch das Trageelement die Karosserie versteift wird.

Die EP 3 121 050 A1 offenbart ein Tanksystem für ein Fahrzeug, mit einem Tank für Betriebsstoffe, der einen allgemein-zylindrischen Mantel mit einer Mantelachse und zwei Endkappen hat, die jeweils an gegenüberliegenden Stirnebenen des Mantels ansetzen, und mindestens einer am Fahrzeug montierbaren Tragkonsole, welche den Tank an einer der Endkappen stützt.

Die WO 2013/083159 A1 offenbart einen Container und eine Ankerstruktur dafür.

Die DE 20 2007 015 487 A1 offenbart ein Tankmodul, umfassend zumindest eine Kraftstoffflasche als Tank, sowie eine Befestigungseinrichtung zum Anschließen des Tankmoduls an einem Montagegrund.

Die US 2017/0334288 A1 offenbart ein Stützsystem für ein Fahrzeug.

Die WO 2016/088089 A1 offenbart ein Verfahren zur Herstellung eines Tanks.

Der Erfindung liegt die Aufgabe zugrunde, eine Tankvorrichtung der eingangs genannten Art bereitzustellen, welche auf einfache Weise herstellbar ist und mechanisch stabil befestigt werden kann.

Diese Aufgabe wird bei der eingangs genannten Tankvorrichtung erfindungsgemäß dadurch gelöst, dass das mindestens eine Halteelement einen ersten Teilbereich aufweist, welcher den Aufnahmebehälter in Umfangsrichtung umschließt und welcher mit dem Aufnahmebehälter formschlüssig verbunden ist, und dass das mindestens eine Halteelement einen zweiten Teilbereich zur Befestigung der Tankvorrichtung aufweist, wobei der zweite Teilbereich des mindestens einen Halteelements zu dem Aufnahmebehälter beabstandet angeordnet ist.

Das mindestens eine Halteelement ist mittels des ersten Teilbereichs formschlüssig mit dem Aufnahmebehälter verbunden und umschließt den Aufnahmebehälter in Umfangsrichtung. Es wird dadurch eine mechanisch stabile Verbindung des mindestens einen Halteelements mit dem Aufnahmebehälter realisiert.

Die Tankvorrichtung ist beispielsweise mittels des zweiten Teilbereichs des mindestens einen Halteelements an einem Fahrzeug und/oder Flugzeug befestigbar und/oder festlegbar. Dadurch ist die Tankvorrichtung beispielsweise mittels des mindestens einen Halteelements in und/oder an dem Fahrzeug und/oder Flugzeug befestigbar.

Beispielsweise dient der Aufnahmebehälter der Aufnahme und/oder Lagerung von Treibstoff. Der Aufnahmebehälter dient beispielsweise der Aufnahme und/oder Lagerung von Festtreibstoff und/oder Flüssigtreibstoff und/oder gasförmigem Treibstoff.

Der Aufnahmebehälter ist beispielsweise als Druckbehälter und/oder als Drucktankbehälter ausgebildet.

Der Aufnahmebehälter weist beispielsweise einen Innenraum auf, welcher von einer Wandung des Aufnahmebehälters umgeben ist und/oder begrenzt wird. Beispielsweise umschließt die Wandung des Aufnahmebehälters einen Innenraum des Aufnahmebehälters in Umfangsrichtung.

Die Tankvorrichtung wird beispielsweise in einem Flugkörper, wie zum Beispiel einer Rakete, eingesetzt. Im Flugfall der Rakete dehnt sich der Aufnahmebehälter aufgrund eines großen Innendrucks typischerweise stark aus. Dadurch, dass das mindestens eine Halteelement den Aufnahmebehälter in Umfangsrichtung umschließt und mit dem Aufnahmebehälter formschlüssig verbunden ist, lassen sich auf den Aufnahmebehälter wirkende Kräfte auf technisch einfache Weise auf das mindestens eine Halteelement übertragen. Es lassen sich dadurch weiterhin aus der Ausdehnung des Aufnahmebehälters resultierende Verspannungen reduzieren. Es können dadurch weiterhin stoffschlüssige Verbindungen vermieden werden, wie zum Beispiel Klebeverbindungen zwischen Halteelement und Aufnahmebehälter.

Insbesondere kann es vorgesehen sein, dass das mindestens eine Halteelement als integrales Bauteil ausgebildet ist und/oder durchgängig aus dem gleichen Material hergestellt ist.

Das mindestens eine Halteelement ist beispielsweise mittels des ersten Teilbereichs in axialer und/oder radialer Richtung des Aufnahmebehälters formschlüssig mit dem Aufnahmebehälter verbunden.

Der erste Teilbereich des mindestens einen Halteelements ist beispielsweise durch Formschluss in axialer und/oder radialer Richtung des Aufnahmebehälters mit dem Aufnahmebehälter verbunden und/oder an dem Aufnahmebehälter festgelegt und/oder an dem Aufnahmebehälter gehalten.

Insbesondere kann es vorgesehen sein, dass eine Relativbewegung des mindestens einen Halteelements zu dem Aufnahmebehälter in axialer und/oder radialer Richtung des Aufnahmebehälters durch Formschluss des mindestens einen Halteelements mit dem Aufnahmebehälter gesperrt ist.

Insbesondere kann es vorgesehen sein, dass der Aufnahmebehälter verschlossen ist oder verschließbar ist und insbesondere allseitig verschlossen ist oder verschließbar ist. Beispielsweise ist der Aufnahmebehälter fluiddicht und/oder gasdicht verschlossen oder verschließbar.

Der erste Teilbereich des mindestens einen Halteelements umschließt den Aufnahmebehälter in Umfangsrichtung. Hierdurch lässt sich eine gute Übertragung von Kräften des Aufnahmebehälters auf das mindestens eine Halteelement realisieren. Es lässt sich dadurch der Aufnahmebehälter mittels des mindestens einen Halteelements stabil und sicher befestigen.

Insbesondere kann es vorgesehen sein, dass der erste Teilbereich und der zweite Teilbereich den Aufnahmebehälter in Umfangsrichtung umschließen.

In Umfangsrichtung umschließen bedeutet, dass der erste Teilbereich und/oder der zweite Teilbereich des mindestens einen Halteelements den Aufnahmebehälter in Umfangsrichtung des Aufnahmebehälters vollständig umgeben und/oder geschlossen umgeben. Beispielsweise umschließen der erste Teilbereich und/oder der zweite Teilbereich des mindestens einen Halteelements den Aufnahmebehälter in Umfangsrichtung des Aufnahmebehälters vollständig und/oder geschlossen.

In Umfangsrichtung umschließen bedeutet weiterhin, dass der erste Teilbereich und/oder der zweite Teilbereich des mindestens einen Halteelements den Aufnahmebehälter in zwei von drei Raumrichtungen umschließen. Die zwei Raumrichtungen liegen beispielsweise in einer Ebene, welche quer und insbesondere senkrecht zu einer Längsmittelachse des Aufnahmebehälters orientiert ist.

Unter der Umfangsrichtung ist eine Umfangsrichtung des Aufnahmebehälters zu verstehen. Die Umfangsrichtung ist quer und insbesondere senkrecht zu einer Längsmittelachse des Aufnahmebehälters orientiert. Die Umfangsrichtung liegt beispielsweise in einer Ebene, welche quer und insbesondere senkrecht zu der Längsmittelachse des Aufnahmebehälters orientiert ist.

Das mindestens eine Halteelement ist beispielsweise mittels des ersten Teilbereichs an dem Aufnahmebehälter festgelegt und/oder an dem Aufnahmebehälter fixiert und/oder formschlüssig mit dem Aufnahmebehälter verbunden. Der erste Teilbereich des mindestens einen Halteelements ist beispielsweise mit der Außenseite des Aufnahmebehälters formschlüssig verbunden und/oder an der Außenseite des Aufnahmebehälters formschlüssig mit dem Aufnahmebehälter verbunden.

Günstig kann es sein, wenn der Aufnahmebehälter zumindest näherungsweise hohlzylinderförmig ausgebildet ist und/oder eine hohlzylinderförmige Einhüllende aufweist.

Falls nicht anders angegeben, ist unter der Angabe "zumindest näherungsweise" zu verstehen, dass eine geometrische Form um durchschnittlich höchstens 20 % und insbesondere durchschnittlich höchstens 10 % von einer angegebenen idealen geometrischen Form abweicht oder dass ein Wert und/oder ein Abstand und/oder ein Winkel um höchstens 20 % und insbesondere höchstens 10 % von dem angegebenen Wert und/oder Abstand und/oder Winkel abweicht. Eine prozentuale Abweichung einer geometrischen Form von einer idealen geometrischen Form entspricht beispielsweise einer durchschnittlichen Abweichung einer Breite und/oder einer Länge und/oder einer Höhe der geometrischen Form von der Breite und/oder Länge und/oder Höhe der angegebenen idealen geometrischen Form.

Zumindest näherungsweise hohlzylinderförmig bedeutet beispielsweise, dass eine Form des Aufnahmebehälters durchschnittlich um höchstens 20 % und insbesondere um höchstens 10 % von einer Form eines idealen Hohlzylinders abweicht.

Günstig kann es sein, wenn das mindestens eine Halteelement zumindest näherungsweise hohlzylinderförmig ausgebildet ist und/oder eine hohlzylinderförmige Einhüllende aufweist. Das mindestens eine Halteelement ist beispielsweise zumindest näherungsweise als hohlzylinderförmige Ummantelung und/oder Hülle ausgebildet. Das mindestens eine Halteelement lässt sich dadurch auf einfache Weise an dem Aufnahmebehälter anordnen und/oder ausbilden.

Günstig kann es sein, wenn sich der zweite Teilbereich des mindestens einen Halteelements in einer zu einer Längsmittelachse des Aufnahmebehälters parallelen Richtung an den ersten Teilbereich des mindestens einen Halteelements anschließt. Der zweite Teilbereich schließt sich beispielsweise in axialer Richtung des Aufnahmebehälters an den ersten Teilbereich an.

Unter einer axialen Richtung ist eine Richtung zu verstehen, welche parallel zu einer Längsmittelachse des Aufnahmebehälters orientiert ist.

Vorteilhaft kann es sein, wenn ein größter radialer Abstand des mindestens einen Halteelements von einer Längsmittelachse des Aufnahmebehälters zumindest näherungsweise einem größten radialen Abstand einer Außenseite einer Wandung des Aufnahmebehälters von der Längsmittelachse entspricht.

Die Außenseite der Wandung ist dabei einem Innenraum des Aufnahmebehälters abgewandt.

Zumindest näherungsweise bedeutet insbesondere, dass der größte radiale Abstand der Außenseite des Aufnahmebehälters von der Längsmittelachse höchstens um 10 % von dem größten radialen Abstand des mindestens einen Halteelements von der Längsmittelachse abweicht.

Insbesondere kann es vorgesehen sein, dass das mindestens eine Halteelement in radialer Richtung zumindest näherungsweise nicht über Begrenzungen des Aufnahmebehälters hinausragt.

Insbesondere kann es vorgesehen sein, dass ein Radius des mindestens einen Halteelements in dessen ersten Teilbereich zumindest näherungsweise einem Radius des mindestens einen Halteelements in dessen zweiten Teilbereich entspricht.

Zumindest näherungsweise bedeutet insbesondere, dass der Radius des mindestens einen Halteelements in dessen ersten Teilbereich um höchstens 10 % von dem Radius des mindestens einen Halteelements in dessen zweiten Teilbereich abweicht.

Der Radius des mindestens einen Halteelements entspricht beispielsweise einem Abstand des mindestens einen Halteelements von einer Längsmittelachse des Aufnahmebehälters.

Insbesondere kann es vorgesehen sein, dass ein Radius des mindestens einen Halteelements in dessen ersten Teilbereich und/oder in dessen zweiten Teilbereich zumindest näherungsweise einem durchschnittlichen Radius des Aufnahmebehälters entspricht.

Der Radius des Aufnahmebehälters entspricht, beispielsweise einem Abstand der Außenseite der Wandung des Aufnahmebehälters von der Längsmittelachse des Aufnahmebehälters.

Vorteilhaft kann es sein, wenn der erste Teilbereich des mindestens einen Halteelements und der zweite Teilbereich des mindestens einen Halteelements einstückig miteinander verbunden sind, und/oder wenn der erste Teilbereich des mindestens einen Halteelements und der zweite Teilbereich des mindestens einen Halteelements aus dem gleichen Material hergestellt sind. Das mindestens eine Halteelement lässt sich dadurch auf technisch einfache Weise an dem Aufnahmebehälter anordnen und/oder herstellen.

Günstig kann es sein, wenn der Aufnahmebehälter aus einem Kunststoffmaterial hergestellt ist oder ein Kunststoffmaterial umfasst, und insbesondere wenn der Aufnahmebehälter aus einem Faserverbundwerkstoffmaterial hergestellt ist oder ein Faserverbundwerkstoffmaterial umfasst. Der Aufnahmebehälter lässt sich dadurch mechanisch stabil und mit geringem Gewicht ausführen.

Der Aufnahmebehälter ist beispielsweise aus einem kohlenstofffaserverstärkten Kunststoffmaterial hergestellt oder umfasst ein kohlenstofffaserverstärktes Kunststoffmaterial.

Vorteilhaft kann es sein, wenn der erste Teilbereich und/oder der zweite Teilbereich des mindestens einen Halteelements aus einem Faserverbundwerkstoffmaterial hergestellt sind, und insbesondere wenn ein Matrixmaterial des Faserverbundwerkstoffmaterials des ersten Teilbereichs und/oder des zweiten Teilbereichs des mindestens einen Halteelements ein thermoplastisches und/oder duroplastisches Matrixmaterial aufweisen. Das mindestens eine Halteelement lässt sich dadurch an dem Aufnahmebehälter auf technisch einfache Weise anordnen und/oder herstellen.

Beispielsweise ist eine Faserorientierung des Faserverbundwerkstoffmaterials des mindestens einen Halteelements in axialer Richtung und/oder in Umfangsrichtung des Aufnahmebehälters orientiert.

Günstig kann es sein, wenn das mindestens eine Halteelement in einem axialen Endbereich des Aufnahmebehälters angeordnet ist. Der zweite Teilbereich des mindestens einen Halteelements lässt sich dadurch beispielsweise zu der Wandung des Aufnahmebehälters beabstandet anordnen. Der zweite Teilbereich des mindestens einen Halteelements steht dann insbesondere nicht in direktem mechanischen Kontakt mit der Wandung des Aufnahmebehälters.

Unter einem axialen Endbereich des Aufnahmebehälters ist ein Endbereich des Aufnahmebehälters in einer zu einer Längsmittelachse des Aufnahmebehälters parallelen Richtung zu verstehen.

Der Aufnahmebehälter weist beispielsweise einen ersten axialen Endbereich und einen zu dem ersten axialen Endbereich gegenüberliegenden zweiten axialen Endbereich auf. Der erste axiale Endbereich ist parallel zu der Längsmittelachse des Aufnahmebehälters zu dem zweiten axialen Endbereich beabstandet.

Insbesondere kann es vorgesehen sein, dass ein erstes Halteelement in dem ersten axialen Endbereich angeordnet ist, und dass ein zweites Halteelement in dem zweiten axialen Endbereich angeordnet ist.

Vorteilhaft kann es sein, wenn ein in radialer Richtung orientierter Abstand eines Abschnitts des zweiten Teilbereichs des mindestens einen Halteelements von einer Außenseite einer Wandung des Aufnahmebehälters in Abhängigkeit eines Abstands des jeweiligen Abschnitts zu einem axialen Ende des Aufnahmebehälters unterschiedlich gewählt wird. Die Wandung des Aufnahmebehälters umschließt einen Innenraum des Aufnahmebehälters.

Unter einem axialen Ende des Aufnahmebehälters ist ein Ende des Aufnahmebehälters in einer zu einer Längsmittelachse des Aufnahmebehälters parallelen Richtung zu verstehen.

Der Aufnahmebehälter weist beispielsweise ein erstes axiales Ende und ein zu dem ersten axialen Ende gegenüberliegendes zweites axiales Ende auf. Das erste axiale Ende ist parallel zu der Längsmittelachse des Aufnahmebehälters zu dem zweiten axialen Ende beabstandet.

Beispielsweise weist der Aufnahmebehälter an einem axialen Ende eine Öffnung zur Zufuhr und/oder Abfuhr von Fluid und/oder Treibstoff auf.

Insbesondere kann es vorgesehen sein, dass der erste Teilbereich des mindestens einen Halteelements einem axialen Ende des Aufnahmebehälters abgewandt angeordnet ist, und dass der zweite Teilbereich des mindestens einen Halteelements dem axialen Ende des Aufnahmebehälters zugewandt angeordnet ist.

Vorteilhaft kann es sein, wenn ein in radialer Richtung orientierter Abstand des zweiten Teilbereichs des mindestens einen Halteelements von einer Außenseite einer Wandung des Aufnahmebehälters in Richtung eines dem zweiten Teilbereich nächstliegenden axialen Endes des Aufnahmebehälters zunimmt.

Insbesondere kann es vorgesehen sein, dass ein in radialer Richtung orientierter Abstand des zweiten Teilbereichs des mindestens einen Halteelements von der Außenseite der Wandung des Aufnahmebehälters an einem axialen Ende des Aufnahmebehälters am größten ist.

Insbesondere kann es vorgesehen sein, dass ein Ende des zweiten Teilbereichs des mindestens einen Halteelements in axialer Richtung über ein nächstliegendes axiales Ende des Aufnahmebehälters hinausragt.

Alternativ hierzu kann es vorgesehen sein, dass ein axiales Ende des Aufnahmebehälters in axialer Richtung über ein dem axialen Ende nächstliegendes Ende des zweiten Teilbereichs des mindestens einen Halteelements hinausragt.

Insbesondere kann es vorgesehen sein, dass ein in radialer Richtung orientierter Abstand des zweiten Teilbereichs des mindestens einen Halteelements von der Außenseite der Wandung des Aufnahmebehälters an einem dem ersten Teilbereich zugewandten Ende des zweiten Teilbereichs am kleinsten ist.

Günstig kann es sein, wenn der erste Teilbereich des mindestens einen Halteelements an einer Außenseite der Wandung des Aufnahmebehälters anliegt und/oder eine Außenseite der Wandung des Aufnahmebehälters mechanisch kontaktiert. Dadurch kann beispielsweise eine formschlüssige Verbindung des ersten Teilbereichs mit und/oder an der Außenseite der Wandung des Aufnahmebehälters hergestellt werden.

Insbesondere kann es vorgesehen sein, dass der zweite Teilbereich des mindestens einen Halteelements zu der Außenseite der Wandung des Aufnahmebehälters mit einem Abstand beabstandet angeordnet ist. Eine Abstandsrichtung des Abstands ist vorzugsweise quer und insbesondere senkrecht zu einer Längsmittelachse des Aufnahmebehälters orientiert.

Insbesondere kann es vorgesehen sein, dass der zweite Teilbereich nicht an der Außenseite der Wandung des Aufnahmebehälters anliegt und/oder dass der zweite Teilbereich die Außenseite des Aufnahmebehälters nicht mechanisch kontaktiert.

Vorteilhaft kann es sein, wenn der Aufnahmebehälter und/oder das mindestens eine Halteelement zumindest näherungsweise rotationssymmetrisch zu einer Längsmittelachse des Aufnahmebehälters angeordnet und/oder ausgebildet sind. Es lässt sich dadurch eine möglichst symmetrische und/oder gleichmäßige Übertragung von Kräften des Aufnahmebehälters auf das mindestens eine Halteelement erreichen.

Vorteilhaft kann es sein, wenn die Wandung des Aufnahmebehälters eine Einbuchtung und/oder eine Ausbuchtung zur formschlüssigen Verbindung des Aufnahmebehälters mit dem mindestens einen Halteelement aufweist.

Die Wandung des Aufnahmebehälters weist beispielsweise eine Einbuchtung und/oder eine Ausbuchtung in radialer Richtung auf.

In einem Bereich der Einbuchtung und/oder der Ausbuchtung weist die Wandung beispielsweise eine Verkleinerung und/oder eine Vergrößerung des Radius auf.

Vorteilhaft kann es sein, wenn das mindestens eine Halteelement eine Einbuchtung und/oder eine Ausbuchtung aufweist, und wenn die Einbuchtung und/oder die Ausbuchtung des mindestens einen Halteelements eine zu einer Form der Einbuchtung und/oder der Ausbuchtung des Aufnahmebehälters korrespondierende Form aufweist. Es lässt sich dadurch auf technisch einfache Weise eine formschlüssige Verbindung des mindestens einen Halteelements mit dem Aufnahmebehälter herstellen.

Insbesondere kann es vorgesehen sein, dass die Einbuchtung und/oder die Ausbuchtung des mindestens einen Halteelements in dem ersten Teilbereich des mindestens einen Halteelements angeordnet und/oder ausgebildet ist.

Das mindestens eine Halteelement weist beispielsweise eine Einbuchtung und/oder eine Ausbuchtung in radialer Richtung auf.

In einem Bereich der Einbuchtung und/oder der Ausbuchtung weist das mindestens eine Halteelement beispielsweise eine Verkleinerung und/oder eine Vergrößerung des Radius auf.

Die Einbuchtung des Aufnahmebehälters ist beispielsweise als Taillierung der Wandung des Aufnahmebehälters in radialer Richtung ausgebildet.

Günstig kann es sein, wenn der zweite Teilbereich des mindestens einen Halteelements als Flansch ausgebildet ist und/oder einen Flanschbereich aufweist. Mittels des Flanschs und/oder des Flanschbereichs ist die Tankvorrichtung in axialer und/oder radialer Richtung fixierbar und/oder festlegbar.

Vorteilhaft kann es sein, wenn der zweite Teilbereich des mindestens einen Halteelements einen Verbindungsbereich zur Fixierung und/oder Festlegung der Tankvorrichtung in axialer und/oder radialer Richtung aufweist.

Beispielsweise sind zur Fixierung und/oder Festlegung der Tankvorrichtung in axialer und/oder radialer Richtung Verbindungselemente vorgesehen, welche mit dem Verbindungsbereich des mindestens einen Halteelements verbunden sind und/oder lösbar verbunden sind. Die Verbindungselemente sind beispielsweise in dem Verbindungsbereich des mindestens einen Halteelements mit dem mindestens einen Halteelement verbunden und/oder an dem mindestens einen Halteelement fixiert.

Die Verbindungselemente erstrecken sich beispielsweise radial nach außen.

Beispielsweise ist die Tankvorrichtung mittels des Verbindungsbereichs und/oder der Verbindungselemente mit einer Aufnahmevorrichtung zur Aufnahme der Tankvorrichtung lösbar verbindbar.

Die Tankvorrichtung ist beispielsweise mittels des Verbindungsbereichs und/oder der Verbindungselemente mit einem Fahrzeug und/oder Flugkörper lösbar verbindbar.

Vorteilhaft kann es sein, wenn ein Radius des Aufnahmebehälters in einem axialen Endbereich des Aufnahmebehälters kleiner ist als ein Radius des Aufnahmebehälters in einem Mittelbereich des Aufnahmebehälters, und insbesondere wenn der Radius des Aufnahmebehälters in Richtung eines axialen Endes des Aufnahmebehälters gegenüber dem Radius im Mittelbereich reduziert wird. Es lässt sich dadurch auf einfache Weise ein Halteelement an dem Aufnahmebehälter realisieren, dessen zweiter Teilbereich zu der Wandung des Aufnahmebehälters beabstandet angeordnet ist.

Beispielsweise ist der Radius des Aufnahmebehälters an einem axialen Ende des Aufnahmebehälters am kleinsten.

Erfindungsgemäß umfasst das eingangs genannte Fahrzeug eine vorstehend beschriebene Tankvorrichtung. Das Fahrzeug ist insbesondere ein Flugkörper, welcher eine vorstehend beschriebene Tankvorrichtung umfasst.

Die Tankvorrichtung dient beispielsweise zur Versorgung eines Triebwerks des Flugkörpers mit Treibstoff.

Erfindungsgemäß wird ein Verfahren zur Herstellung einer Tankvorrichtung bereitgestellt, umfassend einen Aufnahmebehälter und mindestens ein mit dem Aufnahmebehälter verbundenes Halteelement, welches einen ersten Teilbereich und einen zweiten Teilbereich aufweist, wobei das Verfahren die Schritte umfasst, dass ein Formelement mit dem Aufnahmebehälter verbunden wird, welches eine zu einer Form des herzustellenden zweiten Teilbereichs des mindestens einen Halteelements korrespondierende Form aufweist, ein Vorläufermaterial des mindestens einen Halteelements an einer Außenseite einer Wandung des Aufnahmebehälters und an einer Außenseite des Formelements angeordnet wird, aus dem Vorläufermaterial ein Halteelement hergestellt wird, und nach Herstellung des mindestens einen Halteelements das Formelement entfernt wird.

Das erfindungsgemäße Verfahren weist bereits die im Zusammenhang mit der erfindungsgemäßen Tankvorrichtung beschriebenen Vorteile auf.

Eine erfindungsgemäße Tankvorrichtung lässt sich insbesondere mit dem erfindungsgemäßen Verfahren herstellen.

Die jeweiligen Außenseiten der Wandung und/oder des Formelements sind einem Innenraum des Aufnahmebehälters abgewandte Seiten.

Das Formelement wird beispielsweise mit der Wandung des Aufnahmebehälters verbunden und insbesondere lösbar verbunden. Das Formelement wird insbesondere mit der Wandung des Aufnahmebehälters derart verbunden, dass es nach der Herstellung von der Wandung und/oder dem Aufnahmebehälter gelöst und/oder entfernt werden kann.

Insbesondere kann es vorgesehen sein, dass das Formelement den Aufnahmebehälter in Umfangsrichtung umschließt und/oder formschlüssig mit dem Aufnahmebehälter verbunden wird.

Das Vorläufermaterial des mindestens einen Halteelements ist beispielsweise ein Faser-Matrix-Halbzeug.

Die nachfolgende Beschreibung bevorzugter Ausführungsformen dient im Zusammenhang mit den Zeichnungen der näheren Erläuterung der Erfindung. Es zeigen:
- Figur 1: eine Querschnittsdarstellung eines Ausführungsbeispiels einer Tankvorrichtung in einer Querschnittsebene durch eine Längsmittelachse der Tankvorrichtung;
- Figur 2: eine Detailansicht des Teilbereichs A gemäß Figur 1;
- Figur 3: eine perspektivische Teilschnittdarstellung der Tankvorrichtung; und
- Figur 4: einen Flugkörper, umfassend eine Tankvorrichtung.

Gleiche oder funktional äquivalente Elemente sind in sämtlichen Figuren mit denselben Bezugszeichen versehen.

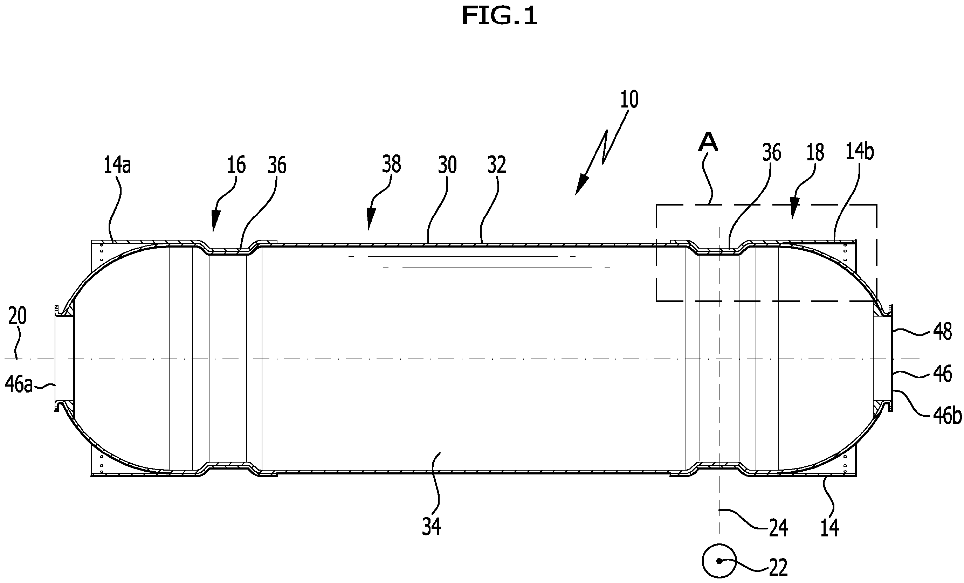

Ein Ausführungsbeispiel einer Tankvorrichtung 10 (Figuren 1, 2 und 3) umfasst einen Aufnahmebehälter 12 und mehrere mit dem Aufnahmebehälter 12 verbundene Halteelemente 14.

Die Tankvorrichtung 10 umfasst beispielsweise zwei Halteelemente 14a, 14b, welche jeweils mit dem Aufnahmebehälter 12 verbunden sind. Die Halteelemente 14a, 14b sind beispielsweise an dem Aufnahmebehälter 12 einander gegenüberliegend angeordnet.

Das Halteelement 14a ist beispielsweise in einem ersten axialen Endbereich 16 des Aufnahmebehälters 12 angeordnet. Das Halteelement 14b ist beispielsweise in einem dem ersten axialen Endbereich 16 gegenüberliegenden zweiten axialen Endbereich 18 des Aufnahmebehälters 12 angeordnet.

Der erste axiale Endbereich 16 ist zu dem zweiten axialen Endbereich 18 parallel zu einer Längsmittelachse 20 des Aufnahmebehälters 12 beabstandet.

Der Aufnahmebehälter 12 und/oder die Halteelemente 14 sind beispielsweise zumindest näherungsweise hohlzylinderförmig ausgebildet. Der Aufnahmebehälter 12 und/oder die Halteelemente 14 sind insbesondere zumindest näherungsweise rotationssymmetrisch zu der Längsmittelachse 20 angeordnet und/oder ausgebildet.

Das Halteelement 14 umschließt den Aufnahmebehälter 12 in einer Umfangsrichtung 22, welche quer und insbesondere senkrecht zu der Längsmittelachse 20 orientiert ist. Die Umfangsrichtung 22 liegt beispielsweise in einer Radialebene 24, welche quer und insbesondere senkrecht zu der Längsmittelachse 20 orientiert ist.

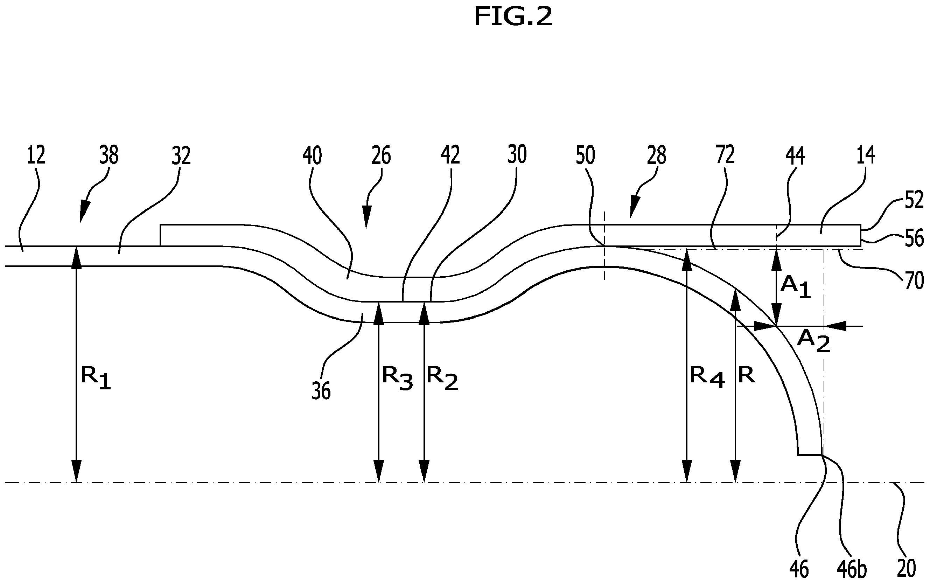

Das Halteelement 14 umfasst einen ersten Teilbereich 26 und einen sich an den ersten Teilbereich 26 anschließenden zweiten Teilbereich 28 (vgl. Figur 2). Der zweite Teilbereich 28 schließt sich an den ersten Teilbereich 26 in einer zur Längsmittelachse 20 parallelen Richtung an.

Das Halteelement 14 ist beispielsweise als einstückiges und/oder integrales Bauteil ausgebildet. Insbesondere ist es vorgesehen, dass der erste Teilbereich 26 und der zweite Teilbereich 28 des Halteelements 14 einstückig und/oder integral miteinander verbunden sind.

Das Halteelement 14 erstreckt sich beispielsweise quer und insbesondere senkrecht zu der Radialebene 24.

Der erste Teilbereich 26 des Halteelements 14 kontaktiert eine Außenseite 30 einer Wandung 32 des Aufnahmebehälters 12 mechanisch. Das Halteelement 14 liegt beispielsweise in dem ersten Teilbereich 26 an der Außenseite 30 der Wandung 32 an.

Die Wandung 32 umschließt einen Innenraum 34 des Aufnahmebehälters 12 in Umfangsrichtung 22. Die Wandung 32 ist beispielsweise quer und insbesondere senkrecht zu der Radialebene 24 orientiert.

Die Außenseite 30 der Wandung 32 ist eine dem Innenraum 34 abgewandte Seite der Wandung 32.

Das Halteelement 14 ist mittels des ersten Teilbereichs 26 in axialer und/oder radialer Richtung des Aufnahmebehälters 12 formschlüssig mit dem Aufnahmebehälter 12 verbunden.

Unter einer axialen Richtung ist eine Richtung zu verstehen, welche parallel zu der Längsmittelachse 20 orientiert ist. Unter einer radialen Richtung ist eine Richtung zu verstehen, welche in der Radialebene 24 liegt.

Zur formschlüssigen Verbindung des Halteelements 14 mit dem Aufnahmebehälter 12 weist die Außenseite 30 des Aufnahmebehälters 12 eine Einbuchtung 36 in radialer Richtung auf. Beispielsweise ist jeweils eine Einbuchtung 36 in dem ersten axialen Endbereich 16 und dem zweiten axialen Endbereich 18 des Aufnahmebehälters 12 ausgebildet.

Im Bereich der Einbuchtung 36 ist ein Radius R des Aufnahmebehälters 12 im Vergleich zu Radien R von sich an die Einbuchtung 36 in axialer Richtung anschließenden Bereichen des Aufnahmebehälters 12 reduziert. Ein Radius R des Aufnahmebehälters 12 entspricht einem kürzesten Abstand der Außenseite 30 der Wandung 32 des Aufnahmebehälters 12 von der Längsmittelachse 20.

Der Aufnahmebehälter 12 weist beispielsweise in einem Mittelbereich 38 einen Radius R₁ auf. Der Mittelbereich 38 ist in axialer Richtung zwischen dem ersten axialen Endbereich 16 und dem zweiten axialen Endbereich 18 angeordnet.

Im Bereich der Einbuchtung 36 weist der Aufnahmebehälter 12 einen Radius R₂ auf, welcher kleiner als der Radius R₁ ist.

Die Einbuchtung 36 ist beispielsweise ringförmig und/oder kreisringförmig an der Außenseite 30 des Aufnahmebehälters 12 ausgebildet.

Zur formschlüssigen Verbindung des Halteelements 14 mit dem Aufnahmebehälter 12 weist das Halteelement 14 in dem ersten Teilbereich 26 eine zu der Außenseite 30 des Aufnahmebehälters 12 komplementär ausgebildete Form auf.

Bei dem gezeigten Ausführungsbeispiel weist das Halteelement 14 in dem ersten Teilbereich 26 in radialer Richtung eine Einbuchtung 40 auf. Im Bereich der Einbuchtung 40 ist ein Radius R₃ des Halteelements 14 gegenüber den Radien des Halteelements 14 in den sich an die Einbuchtung 40 anschließenden Bereichen des Halteelements 14 verringert.

Ein Radius R₃ des Halteelements 14 entspricht beispielsweise einem kürzesten Abstand einer Innenseite 42 des Halteelements 14 von der Längsmittelachse 20. Die Innenseite 42 ist der Außenseite 30 des Aufnahmebehälters 12 zugewandt und/oder kontaktiert die Außenseite 30 des Aufnahmebehälters 12 mechanisch.

Insbesondere kann es vorgesehen sein, dass ein Radius R₃ des Halteelements 14 in dem ersten Teilbereich 26 zumindest näherungsweise einem Radius R₃ des Aufnahmebehälters 12 entspricht. In dem ersten Teilbereich 26 folgt das Halteelement 14 beispielsweise einer Kontur der Außenseite 30 des Aufnahmebehälters 12.

Mittels der Einbuchtungen 36 und 40 ist das Halteelement 14 formschlüssig mit dem Aufnahmebehälter 12 verbunden. Dadurch wird eine Relativbewegung des Halteelements 14 bezüglich des Aufnahmebehälters 12 in axialer und/oder radialer Richtung gesperrt.

Alternativ oder zusätzlich kann es vorgesehen sein, dass zur Herstellung einer formschlüssigen Verbindung zwischen dem Halteelement 14 und dem Aufnahmebehälter 12 der Aufnahmebehälter 12 und/oder das Halteelement 14 eine (nicht dargestellte) Ausbuchtung in radialer Richtung aufweisen. Im Bereich der Ausbuchtung ist ein Radius R des Aufnahmebehälters 12 und/oder ein Radius R₃ des Halteelements 14 gegenüber den Radien des Aufnahmebehälters 12 und/oder des Halteelements 14 in den sich an die Ausbuchtung anschließenden Bereichen des Aufnahmebehälters 12 und/oder des Halteelements 14 vergrößert.

In dem zweiten Teilbereich 28 verläuft die Innenseite des Halteelements 14 zu der Außenseite 30 des Aufnahmebehälters 12 beabstandet. In dem zweiten Teilbereich 28 liegt die Innenseite 42 des Halteelements 14 insbesondere nicht an der Außenseite 30 des Aufnahmebehälters an und/oder kontaktiert die Außenseite 30 des Aufnahmebehälters 12 insbesondere nicht mechanisch.

Die Innenseite 42 des Halteelements 14 ist mit einem Abstand A₁ von der Außenseite 30 des Aufnahmebehälters 12 beabstandet. Eine Abstandsrichtung des Abstands A₁ ist dabei quer und insbesondere senkrecht zu der Längsmittelachse 20 orientiert.

Insbesondere kann es vorgesehen sein, dass der Abstand A₁ eines Abschnitts 44 des zweiten Teilbereichs 28 in Abhängigkeit eines Abstands A₂ des jeweiligen Abschnitts 44 zu einem axialen Ende 46 des Aufnahmebehälters 12 unterschiedlich gewählt wird. Eine Abstandsrichtung des Abstands A₂ ist dabei parallel zu der Längsmittelachse 20 des Aufnahmebehälters 12 orientiert.

Unter dem axialen Ende 46 ist ein Ende und/oder eine äußere Begrenzung des Aufnahmebehälters 12 in einer zu der Längsmittelachse 20 parallelen Richtung zu verstehen.

Beispielsweise weist der Aufnahmebehälter ein erstes axiales Ende 46a und ein zu dem ersten axialen Ende 46a gegenüberliegendes zweites axiales Ende 46b auf. Das erste axiale Ende 46a ist in einer zu der Längsmittelachse 20 parallelen Richtung zu dem zweiten axialen Ende 46b beabstandet.

Beispielsweise weist der Aufnahmebehälter 12 an dem ersten axialen Ende 46a und/oder an dem zweiten axialen Ende 46b jeweils eine Öffnung 48 zur Zufuhr und/oder Abfuhr eines Mediums zu/von dem Innenraum 34 auf.

Beispielsweise nimmt der Abstand A₁ in Richtung des dem zweiten Teilbereich 28 des Halteelements 14 nächstliegenden axialen Endes 46 zu. Der Abstand A₁ nimmt beispielsweise ausgehend von einem dem ersten Teilbereich 26 zugewandten Ende 50 des zweiten Teilbereichs 28 in Richtung des axialen Endes 46 zu und insbesondere monoton zu.

Beispielsweise ist der Abstand A₁ an dem Ende 50 am kleinsten und/oder an dem axialen Ende 46 am größten.

Insbesondere kann es vorgesehen sein, dass der Radius R des Aufnahmebehälters 12 in dem ersten axialen Endbereich 16 und/oder in dem zweiten axialen Endbereich 18 zu dem jeweiligen axialen Ende 46 hin abnimmt und insbesondere monoton abnimmt.

Der Radius R des Aufnahmebehälters 12 nimmt beispielsweise in axialer Richtung, ausgehend von einer Position des Endes 50 des Halteelements 14 zu dem axialen Ende 46 hin ab und insbesondere monoton ab.

Beispielsweise ist der Radius R des Aufnahmebehälters 14 an dem axialen Ende 46 am kleinsten.

Beispielsweise entspricht der Radius R des Aufnahmebehälters auf Höhe des Endes 50 des zweiten Teilbereichs 28 des Halteelements 14 zumindest näherungsweise dem Radius R₁ des Aufnahmebehälters 12 in dessen Mittelbereich 38.

Der zweite Teilbereich 28 des Halteelements 14 weist ein dem Ende 50 gegenüberliegendes weiteres Ende 52 auf. Das weitere Ende 52 ist beispielsweise in einer zu der Längsmittelachse 20 parallelen Richtung zu dem Ende 50 beabstandet. Der zweite Teilbereich 28 erstreckt sich beispielsweise in axialer Richtung zwischen den Enden 50 und 52.

Insbesondere kann es vorgesehen sein, dass ein Radius R₃ des Halteelements 14 in dem zweiten Teilbereich 28 zumindest näherungsweise konstant ist.

Der zweite Teilbereich 28 des Halteelements 14 ragt beispielsweise in axialer Richtung über das axiale Ende 46 des Aufnahmebehälters 12 hinaus. Unter zumindest näherungsweise ist zu verstehen, dass Abweichungen von höchstens 10 % und insbesondere höchstens 5 % vorliegen. Beispielsweise weicht ein Radius R₃ des Halteelements 14 in dem zweiten Teilbereich 28 von einem durchschnittlichen Radius R₃ des Halteelements 14 in dem zweiten Teilbereich 28 um höchstens 10 % und insbesondere um höchstens 5 % ab.

Der zweite Teilbereich 28 des Halteelements 14 weist einen Verbindungsbereich 54 auf, mittels welchem die Tankvorrichtung fixiert und/oder festgelegt werden kann.

Beispielsweise ist der Verbindungsbereich 54 als Flansch 56 ausgebildet und/oder umfasst einen Flansch 56.

Mittels des Verbindungsbereichs 54 und/oder des Flanschs 56 ist die Tankvorrichtung in axialer und/oder radialer Richtung fixierbar und/oder festlegbar.

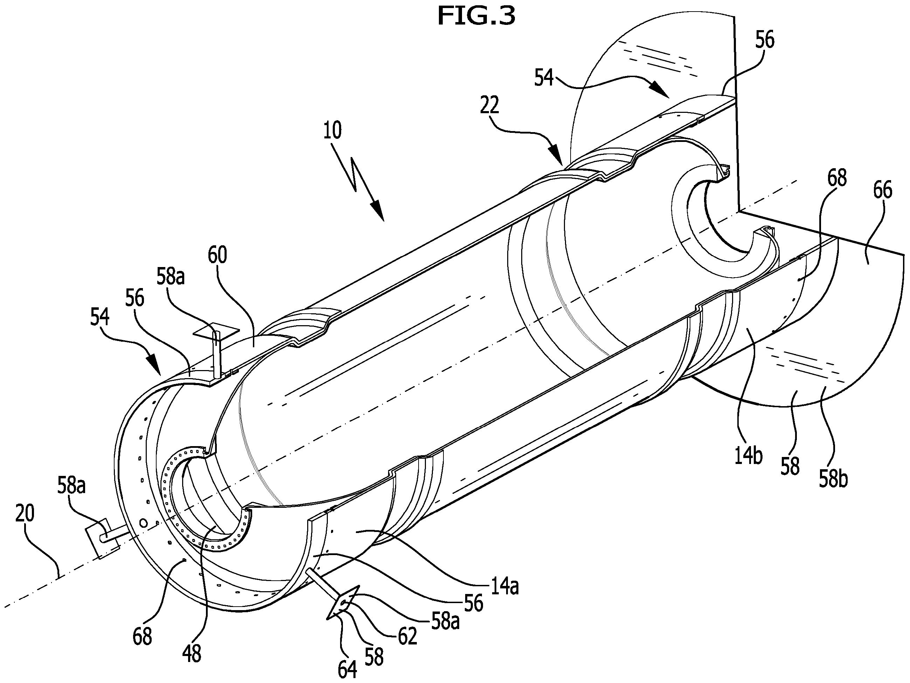

Insbesondere kann es vorgesehen sein, dass in dem Verbindungsbereich 54 und/oder an dem Flansch 56 Verbindungselemente 58 angeordnet sind (vgl. Figur 3). Die Verbindungselemente 58 sind beispielsweise in dem Verbindungsbereich 54 und/oder an dem Flansch 56 mit dem zweiten Teilbereich 28 des Halteelements 14 verbunden.

Der Verbindungsbereich 54 ist beispielsweise ein Bereich des zweiten Teilbereichs 28 des Halteelements 14, welcher zumindest näherungsweise parallel zu der Längsmittelachse 20 orientiert ist. Alternativ oder zusätzlich kann der Verbindungsbereich 54 einen Bereich des zweiten Teilbereichs 28 umfassen, welcher quer und insbesondere senkrecht zu der Längsmittelachse 20 orientiert ist.

Die Verbindungselemente 58 sind beispielsweise in einem Bereich des Endes 52 mit dem Halteelement 14 verbunden.

Insbesondere kann es vorgesehen sein, dass sich ein Verbindungselement 58a quer und insbesondere senkrecht zu einer Außenseite 60 des Halteelements 14 erstreckt. Die Außenseite 60 ist dabei der Innenseite 42 des Halteelements 14 gegenüberliegend und/oder dem Aufnahmebehälter 12 abgewandt.

Die Verbindungselemente 58a erstrecken sich beispielsweise in radialer Richtung und/oder radial nach außen.

Insbesondere sind mehrere Verbindungselemente 58a vorgesehen, welche in Umfangsrichtung 22 gleichmäßig beabstandet angeordnet sind.

Die Verbindungselemente 58a dienen vorzugsweise der Befestigung und/oder Fixierung der Tankvorrichtung 10 in radialer Richtung. Mittels der Verbindungselemente 58a können beispielsweise auf den Aufnahmebehälter 12 wirkende Kräfte aufgenommen werden, welche in radialer Richtung und/oder parallel zu der Radialebene 24 orientiert sind.

Die Verbindungselemente 58a weisen beispielsweise an einem radial äußeren Ende 62 einen Flanschbereich 64 auf. Mittels dieses Flanschbereichs 64 können die Verbindungselemente 58a beispielsweise an einem Fahrzeug und/oder an einem Flugkörper befestigt werden.

Alternativ oder zusätzlich ist mindestens ein Verbindungselement 58b vorgesehen, welches beispielsweise als Ringscheibe und/oder als Kreisringscheibe ausgebildet ist.

Die Ringscheibe und/oder Kreisringscheibe ist quer und insbesondere senkrecht zu der Längsmittelachse 20 orientiert.

Das Verbindungselement 58b dient vorzugsweise der Fixierung und/oder Festlegung der Tankvorrichtung 10 in axialer Richtung. Mittels des Verbindungselements 58b lassen sich vorzugsweise auf den Aufnahmebehälter 12 wirkende Kräfte aufnehmen, welche parallel zu der Längsmittelachse 20 orientiert sind.

Das Verbindungselement 58b weist beispielsweise einen Flanschbereich 66 auf, mittels welchem das Verbindungselement 58b insbesondere mit einem Fahrzeug und/oder einem Flugkörper verbindbar ist.

Beispielsweise kann es vorgesehen sein, dass mindestens ein Verbindungselement 58a mit dem Halteelement 14a verbunden ist und/oder dass mindestens ein Verbindungselement 58b mit dem Halteelement 14b verbunden ist.

Es kann vorgesehen sein, dass das Halteelement 14 in dem Verbindungsbereich 54 eine oder mehrere Öffnungen 68 aufweist. Mittels der Öffnungen 68 können beispielsweise die Verbindungselemente 58 mit dem zweiten Teilbereich 28 des Halteelements 14 verbunden werden. Die Verbindungselemente 58 sind beispielsweise mit einer formschlüssigen Verbindung und insbesondere einer Schraubenverbindung mittels der Öffnungen 68 mit dem Halteelement 14 verbindbar.

Der Aufnahmebehälter 12 ist beispielsweise aus einem kohlenstofffaserverstärkten Kunststoffmaterial hergestellt oder umfasst ein kohlenstofffaserverstärktes Kunststoffmaterial.

Der erste Teilbereich 26 und/oder der zweite Teilbereich 28 des Halteelements 14 sind beispielsweise aus einem Faserverbundwerkstoffmaterial mit einem thermoplastischen und/oder duroplastischen Matrixmaterial hergestellt.

Das thermoplastische Matrixmaterial ist beispielsweise ein Polyetheretherketon-Material.

Eine Faserorientierung des Faserverbundwerkstoffs des Halteelements 14 ist beispielsweise zumindest näherungsweise parallel zur Längsmittelachse 20 und/oder in Umfangsrichtung 22 orientiert.

Die Herstellung der Tankvorrichtung 10 funktioniert wie folgt:
Der Aufnahmebehälter 12 der Tankvorrichtung 10 wird beispielsweise aus einem Faserverbundwerkstoffmaterial und insbesondere aus einem kohlenstofffaserverstärkten Faserverbundwerkstoffmaterial hergestellt. Die Herstellung des Aufnahmebehälters 12 erfolgt beispielsweise durch Wickeln und/oder Flechten eines Vorläufermaterials des Aufnahmebehälters 12.

Die Ausbildung der Einbuchtung 36 erfolgt vorzugsweise bereits während der Herstellung des Aufnahmebehälters 12.

Anschließend wird ein Formelement 70 (angedeutet durch die gestrichelte Linie in Figur 2) in dem ersten axialen Endbereich 16 und/oder in dem zweiten axialen Endbereich 18 des Aufnahmebehälters 12 angeordnet.

Eine Form des Formelements 70 entspricht einer späteren Form des zweiten Teilbereichs 28 des herzustellenden Halteelements 14.

Das Formelement 70 ist beispielsweise in axialer Richtung auf Höhe des späteren Endes 50 des zweiten Teilbereichs 28 mit dem Aufnahmebehälter 12 verbunden.

Ein Radius R₄ des Formelements 70 entspricht beispielsweise zumindest näherungsweise einem Radius R₃ des zweiten Teilbereichs 28 des herzustellenden Halteelements 14.

Der Radius R₄ des Formelements 70 entspricht beispielsweise zumindest näherungsweise dem Radius R₁ des Aufnahmebehälters 12 in dessen Mittelbereich 38.

Zur Herstellung des Halteelements 14 wird ein Vorläufermaterial des Halteelements 14 an der Außenseite 30 und an einer Außenseite 72 des Formelements 70 angeordnet.

Die Außenseite 72 ist eine dem Aufnahmebehälter 12 und/oder der Längsmittelachse 20 abgewandte Seite des Formelements 70.

Das Vorläufermaterial liegt beispielsweise in Form eines Bands und/oder einer Matte und/oder eines Tapes vor.

Das Vorläufermaterial des Halteelements 14 ist beispielsweise ein Faser-Matrix-Halbzeug, wie zum Beispiel ein sogenanntes "Prepreg"-Material. Das Faser-Matrix-Halbzeug weist beispielsweise ein thermoplastisches oder ein duroplastisches Matrixmaterial auf. Als Reaktionsharz wird beispielsweise ein Epoxidharz, wie zum Beispiel HEXCEL RTM6 verwendet.

Durch weitere Verarbeitung des Vorläufermaterials des Halteelements 14, wie zum Beispiel das Aushärten des Vorläufermaterials unter Druck und Temperatur, wird aus dem Vorläufermaterial das Halteelement 14 hergestellt.

Nach der Herstellung des Halteelements 14 wird das Formelement 70 entfernt.

Anschließend werden beispielsweise die räumlichen Dimensionen des Halteelements 14 angepasst und/oder es werden die Öffnungen 68 an dem Halteelement 14 hergestellt. Beispielsweise wird eine in axialer Richtung orientierte Länge des Halteelements 14 angepasst und/oder gekürzt.

Der Aufnahmebehälter 12 der vorstehend beschriebenen Tankvorrichtung 10 dient beispielsweise der Aufnahme und/oder Lagerung von Treibstoff.

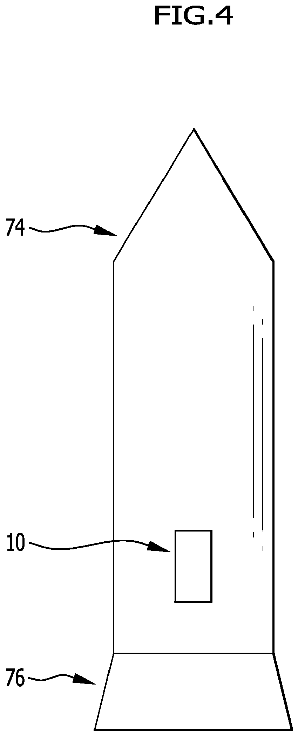

Die Tankvorrichtung 10 ist beispielsweise als Treibstofftank in einem Fahrzeug und/oder in einem Flugkörper einsetzbar. Ein Ausführungsbeispiel eines Flugkörpers 74, welcher eine Tankvorrichtung 10 umfasst, ist in Figur 4 gezeigt.

Bei dem gezeigten Ausführungsbeispiel ist der Flugkörper 74 eine Rakete, welche ein Triebwerk 76 umfasst. Die Tankvorrichtung 10 dient beispielsweise der Treibstoffversorgung des Triebwerks 76.

### Bezugszeichenliste

- R: Radius
- R₁: Radius
- R₂: Radius
- R₃: Radius
- R₄: Radius
- A₁: Abstand
- A₂: Abstand
- 10: Tankvorrichtung
- 12: Aufnahmebehälter
- 14: Halteelement
- 14a: Halteelement
- 14b: Halteelement
- 16: erster axialer Endbereich
- 18: zweiter axialer Endbereich
- 20: Längsmittelachse
- 22: Umfangsrichtung
- 24: Radialebene
- 26: erster Teilbereich
- 28: zweiter Teilbereich
- 30: Außenseite
- 32: Wandung
- 34: Innenraum
- 36: Einbuchtung
- 38: Mittelbereich
- 40: Einbuchtung
- 42: Innenseite
- 44: Abschnitt
- 46: axiales Ende
- 46a: erstes axiales Ende
- 46b: zweites axiales Ende
- 48: Öffnung
- 50: Ende
- 52: Ende
- 54: Verbindungsbereich
- 56: Flansch
- 58: Verbindungselement
- 58a: Verbindungselement
- 58b: Verbindungselement
- 60: Außenseite
- 62: Ende
- 64: Flanschbereich
- 66: Flanschbereich
- 68: Öffnung
- 70: Formelement
- 72: Außenseite
- 74: Rakete
- 76: Triebwerk

## Patentansprüche

1. Tankvorrichtung, umfassend einen Aufnahmebehälter (12) und mindestens ein mit dem Aufnahmebehälter (12) verbundenes Halteelement (14), **dadurch gekennzeichnet, dass** das mindestens eine Halteelement (14) einen ersten Teilbereich (26) aufweist, welcher den Aufnahmebehälter (12) in Umfangsrichtung (22) umschließt und welcher mit dem Aufnahmebehälter (12) formschlüssig verbunden ist, und dass das mindestens eine Halteelement (14) einen zweiten Teilbereich (28) zur Befestigung der Tankvorrichtung aufweist, wobei der zweite Teilbereich (28) des mindestens einen Halteelements (14) zu dem Aufnahmebehälter (12) beabstandet angeordnet ist.

2. Tankvorrichtung nach einem der vorangehenden Ansprüche, **dadurch gekennzeichnet, dass** der Aufnahmebehälter (12) zumindest näherungsweise hohlzylinderförmig ausgebildet ist und/oder eine hohlzylinderförmige Einhüllende aufweist; und/oder
dass das mindestens eine Halteelement (14) zumindest näherungsweise hohlzylinderförmig ausgebildet ist und/oder eine hohlzylinderförmige Einhüllende aufweist.

3. Tankvorrichtung nach einem der vorangehenden Ansprüche, **dadurch gekennzeichnet, dass** sich der zweite Teilbereich (28) des mindestens einen Halteelements (14) in einer zu einer Längsmittelachse (20) des Aufnahmebehälters (12) parallelen Richtung an den ersten Teilbereich (26) des mindestens einen Halteelements (14) anschließt.

4. Tankvorrichtung nach einem der vorangehenden Ansprüche, **dadurch gekennzeichnet, dass** ein größter radialer Abstand (R₃) des mindestens einen Halteelements von einer Längsmittelachse (20) des Aufnahmebehälters (12) zumindest näherungsweise einem größten radialen Abstand (R) einer Außenseite (30) einer Wandung (32) des Aufnahmebehälters (12) von der Längsmittelachse (20) entspricht.

5. Tankvorrichtung nach einem der vorangehenden Ansprüche, **dadurch gekennzeichnet, dass** der erste Teilbereich (26) des mindestens einen Halteelements (14) und der zweite Teilbereich (28) des mindestens einen Halteelements (14) einstückig miteinander verbunden sind und/oder dass der erste Teilbereich (26) des mindestens einen Halteelements (14) und der zweite Teilbereich (28) des mindestens einen Halteelements (14) aus dem gleichen Material hergestellt sind.

6. Tankvorrichtung nach einem der vorangehenden Ansprüche, **dadurch gekennzeichnet, dass** der Aufnahmebehälter (12) aus einem Kunststoffmaterial hergestellt oder ein Kunststoffmaterial umfasst, und insbesondere dass der Aufnahmebehälter (12) aus einem Faserverbundwerkstoffmaterial hergestellt ist oder ein Faserverbundwerkstoffmaterial umfasst.

7. Tankvorrichtung nach einem der vorangehenden Ansprüche, **dadurch gekennzeichnet, dass** der erste Teilbereich (26) und/oder der zweite Teilbereich (28) des mindestens einen Halteelements (14) aus einem Faserverbundwerkstoffmaterial hergestellt sind, und insbesondere dass ein Matrixmaterial des Faserverbundwerkstoffmaterials des ersten Teilbereichs (26) und/oder des zweiten Teilbereichs (28) des mindestens einen Halteelements (14) ein thermoplastisches und/oder duroplastisches Matrixmaterial aufweisen.

8. Tankvorrichtung nach einem der vorangehenden Ansprüche, **dadurch gekennzeichnet, dass** das mindestens eine Halteelement (14) in einem axialen Endbereich (16; 18) des Aufnahmebehälters (12) angeordnet ist.

9. Tankvorrichtung nach einem der vorangehenden Ansprüche, **dadurch gekennzeichnet, dass** (i) ein in radialer Richtung orientierter Abstand (A₁) eines Abschnitts (44) des zweiten Teilbereichs (28) des mindestens einen Halteelements (14) von einer Außenseite (30) einer Wandung (32) des Aufnahmebehälters (12) in Abhängigkeit eines Abstands (A₂) des jeweiligen Abschnitts (44) zu einem axialen Ende (46) des Aufnahmebehälters (12) unterschiedlich gewählt wird; und/oder
dass (ii) ein in radialer Richtung orientierter Abstand (A₁) des zweiten Teilbereichs (28) des mindestens einen Halteelements (14) von einer Außenseite (30) einer Wandung (32) des Aufnahmebehälters (12) in Richtung eines dem zweiten Teilbereich (28) nächstliegenden axialen Endes (46) des Aufnahmebehälters (12) zunimmt.

10. Tankvorrichtung nach einem der vorangehenden Ansprüche, **dadurch gekennzeichnet, dass** der erste Teilbereich (26) des mindestens einen Halteelements (14) an einer Außenseite (30) einer Wandung (32) des Aufnahmebehälters (12) anliegt und/oder eine Außenseite (30) einer Wandung (32) des Aufnahmebehälters (12) mechanisch kontaktiert.

11. Tankvorrichtung nach einem der vorangehenden Ansprüche, **dadurch gekennzeichnet, dass** der Aufnahmebehälter (12) und/oder das mindestens eine Halteelement (14) zumindest näherungsweise rotationssymmetrisch zu einer Längsmittelachse (20) des Aufnahmebehälters angeordnet und/oder ausgebildet sind.

12. Tankvorrichtung nach einem der vorangehenden Ansprüche, **dadurch gekennzeichnet, dass** eine Wandung (32) des Aufnahmebehälters (12) eine Einbuchtung (36) und/oder eine Ausbuchtung zur formschlüssigen Verbindung des Aufnahmebehälters (12) mit dem mindestens einen Halteelement (14) aufweist, und insbesondere,
dass das mindestens eine Halteelement (14) eine Einbuchtung (40) und/oder eine Ausbuchtung aufweist, und dass die Einbuchtung (40) und/oder die Ausbuchtung des mindestens einen Halteelements eine zu einer Form der Einbuchtung (36) und/oder der Ausbuchtung des Aufnahmebehälters (12) korrespondierende Form aufweist.

13. Tankvorrichtung nach einem der vorangehenden Ansprüche, **gekennzeichnet durch** mindestens eines der Folgenden:
der zweite Teilbereich (28) des mindestens einen Halteelements (14) ist als Flansch (56) ausgebildet und/oder weist einen Flanschbereich auf;
der zweite Teilbereich (28) des mindestens einen Halteelements (14) weist einen Verbindungsbereich (54) zur Fixierung und/oder Festlegung der Tankvorrichtung in axialer und/oder radialer Richtung auf.

14. Tankvorrichtung nach einem der vorangehenden Ansprüche, **dadurch gekennzeichnet, dass** ein Radius (R) des Aufnahmebehälters (12) in einem axialen Endbereich (16; 18) des Aufnahmebehälters (12) kleiner ist als ein Radius (R) des Aufnahmebehälters (12) in einem Mittelbereich (38) des Aufnahmebehälters (12), und insbesondere, dass der Radius (R) des Aufnahmebehälters (12) in Richtung eines axialen Endes (46) des Aufnahmebehälters (12) gegenüber dem Radius (R) im Mittelbereich (38) reduziert wird.

15. Fahrzeug, insbesondere Flugkörper, umfassend eine Tankvorrichtung gemäß einem der Ansprüche 1 bis 14.

16. Verfahren zur Herstellung einer Tankvorrichtung, umfassend einen Aufnahmebehälter (12) und mindestens ein mit dem Aufnahmebehälter (12) verbundenes Halteelement (14), welches einen ersten Teilbereich (26) und einen zweiten Teilbereich (28) aufweist, bei dem ein Formelement (70) mit dem Aufnahmebehälter (12) verbunden wird, welches eine zu einer Form des herzustellenden zweiten Teilbereichs (28) des mindestens einen Halteelements (14) korrespondierende Form aufweist, ein Vorläufermaterial des mindestens einen Halteelements (14) an einer Außenseite (30) einer Wandung (32) des Aufnahmebehälters (12) und an einer Außenseite (72) des Formelements (70) angeordnet wird, aus dem Vorläufermaterial das mindestens eine Halteelement (14) hergestellt wird, und bei dem nach Herstellung des mindestens einen Halteelements (14) das Formelement (70) entfernt wird.
